# FASCICULE DE BREVET EUROPEEN

(11) **EP 2 779 876 B1**
(45) Date de publication et mention de la délivrance du brevet: **07.10.2015**
(21) Numéro de dépôt: 12794427.0
(22) Date de dépôt: 31.10.2012
(51) Int. Cl.: A47J 31/057, A47J 31/44

(54) **MACHINE POUR PREPARER UNE BOISSON FILTREE ET SON PROCEDE DE PREPARATION**
MASCHINE ZUR ZUBEREITUNG EINES GEFILTERTEN GETRÄNKS UND ENTSPRECHENDES HERSTELLUNGSVERFAHREN
MACHINE FOR PREPARING A FILTERED BEVERAGE, AND CORRESPONDING PREPARATION METHOD

(30) Priorité: 14.11.2011 FR 1160334
(43) Date de publication de la demande: 24.09.2014
(73) Titulaire: SEB S.A., 69130 Ecully (FR)
(72) Inventeur: BLONDEL, Mathilde, F-21120 Dienay (FR); MORIN, Gilles, F-21490 Varois Et Chaignot (FR)
(74) Mandataire: Novagraaf Technologies
(86) Numéro de dépôt international: PCT/FR2012/052538
(87) Numéro de publication internationale: WO 2013/072599

(56) Documents cités:
- EP-A2- 0 249 700
- DE-U1- 20 100 865
- DE-U1-202008 015 038

## Description

L'invention concerne une machine pour préparer une boisson filtrée à partir d'une substance alimentaire et d'un liquide, un exemple en est trouvé dans EP 249700

Sont ainsi concernées les machines à café, avec ou sans pression.

Un exemple en est trouvé dans EP 0 828 448 qui divulgue une telle machine comprenant :
- une chambre où est disposée la substance alimentaire,
- des moyens d'alimentation en liquide pour chauffer et faire circuler vers la substance alimentaire ce liquide, à un moment en phase vapeur et à un autre en phase liquide, les moyens d'alimentation comprenant une conduite où circule ledit liquide chauffé qui est ainsi apporté à la substance alimentaire,
- un filtre laissant passer le liquide après que ce liquide ait traversé la substance alimentaire, laquelle est retenue d'un premier côté du filtre,
- et un récipient où est reçue la boisson filtrée et avec lequel communique un second côté du filtre.

Un problème à résoudre concerne la capacité de la machine à augmenter le taux de récupération dans le récipient de certains constituants contenus dans la substance alimentaire placée dans la chambre. Un autre problème concerne la capacité de la machine à obtenir ceci assez rapidement et si possible de façon variable en fonction du souhait de l'utilisateur ou de conditions de réglage prévues et avec un coût de fabrication limité, en vue d'une utilisation en grande série.

Tout ou partie de ces problèmes sont résolus avec la solution proposée où la machine comprend des moyens de fermeture qui ferment la chambre de façon sensiblement étanche à la vapeur au moins au-dessus de la substance alimentaire, lorsque le liquide arrive en phase vapeur par la conduite qui débouche dans la chambre.

Par souci d'efficacité, de compacité et de possible composition de la boisson variable en fonction du souhait de l'utilisateur, on conseille que les moyens de fermeture comprennent des moyens mobiles de fermeture sélective qui:
- lorsque le liquide arrive dans la chambre en phase vapeur, occupent une première position qui assure ladite fermeture sensiblement étanche de la chambre au moins au-dessus, ou en face, de la substance alimentaire, et,
- lorsque le liquide arrive dans la chambre en phase liquide, occupent une seconde position qui assure alors une ouverture à l'air extérieur de la chambre, au moins au-dessus de la substance alimentaire.

Encore par souci d'efficacité, de compacité, de fiabilité et de simplicité de réalisation possible compatible avec une fabrication peu onéreuse en grande série, on recommande par ailleurs que les moyens mobiles de fermeture comprennent, face à la chambre, un support auquel est fixée la conduite et qui est monté mobile vis-à-vis d'un corps fixe dans lequel est située la chambre.

Pour faciliter le chargement et le remplacement de la substance alimentaire et/ou du filtre, on conseille en outre:
- que le corps fixe comprenne un porte-filtre ouvert en partie supérieure pour y placer et en retirer la substance alimentaire et/ou le filtre,
- et que la machine comprenne un couvercle qui recouvre l'ouverture du porte-filtre et dans lequel se déplace ledit support auquel est fixée la conduite, le couvercle et le porte-filtre étant amovibles, ou mobiles, l'un par rapport à l'autre.

Si les moyens mobiles de fermeture comprennent en outre un joint interposé entre le corps fixe et ledit support, autour de l'ouverture du porte-filtre dans ladite première position, l'étanchéité en phase vapeur sera performante, de façon simple, compatible avec une fabrication en grande série et une possible utilisation intensive.

Pour faciliter et sécuriser l'utilisation de la machine, il est par ailleurs recommandé:
- qu'en partie inférieure, la chambre présente un passage de sortie pour la boisson filtrée, ce passage de sortie communiquant avec le récipient quand ce récipient est présent sous le passage de sortie, et,
- que les moyens de fermeture comprennent en outre un clapet disposé en travers du passage et que le récipient ouvre quand ce récipient est présent sous ledit passage, le clapet étant rappelé vers une position fermée quand le récipient est absent.

Ainsi, on évitera une surpression dans la chambre et, en contrôlant la circulation de liquide à travers le clapet on pourra gérer les conditions d'obtention du taux de récupération dans le récipient des constituants attendus contenus dans la substance alimentaire.

Pour favoriser la diffusion du liquide, en phases tant vapeur que liquide, on recommande en outre que, vers la chambre, la conduite se termine par plusieurs orifices à travers lesquels le liquide sera diffusé sur la substance alimentaire située dessous.

Notamment pour une boisson chaude énergisante, telle qu'un café ou un thé, avec donc alors, comme substance alimentaire contenue dans la chambre, une substance contenant de la théine ou caféine, et notamment donc une mouture de café, on recommande que les moyens d'alimentation en liquide comprennent des moyens de régulation pour, qu'en phase vapeur, le liquide débouche dans la chambre à une température inférieure à 110°C et supérieure à 90°C.

Pour satisfaire au mieux les goûts variés des utilisateurs, on conseille par ailleurs que les moyens de régulation comprennent des moyens d'adaptation de la durée pendant laquelle le liquide est fourni à la chambre en phase vapeur, ces moyens d'adaptation étant liés à des moyens de réglage accessibles à l'utilisateur de la machine et qui sont ainsi réglables en fonction du nombre de tasses attendues de boisson et/ou de la quantité de cette boisson reçue dans le récipient.

Par soucis de réduction de coûts et d'efficacité de fonctionnement, on recommande par ailleurs que ladite conduite où circule le liquide chauffé soit la même pour la circulation de ce liquide en phase vapeur et en phase liquide.

Un autre aspect inventif concerne un procédé pour préparer une boisson filtrée à partir d'un liquide et d'une substance alimentaire contenue dans une chambre, en amont d'un filtre filtrant la substance, le procédé comprenant donc, comme décrit dans EP 0 828 448, des étapes où, par une conduite, on apporte jusqu'en face de la substance alimentaire le liquide d'abord en phase vapeur, puis en phase liquide.

Comme indiqué précédemment, pour résoudre avec la solution proposée tout ou partie des problèmes déjà évoqués, il est ici recommandé que, pendant qu'on apporte le liquide en phase vapeur, on ferme la chambre de façon sensiblement étanche à la vapeur au moins au-dessus de la substance alimentaire et on fait déboucher le liquide de la conduite à l'intérieur de la chambre.

A titre complémentaire, en combinaison ou alternative, il est en outre conseillé, pour les raisons également évoquées avant que :
- pendant qu'on apporte le liquide en phase liquide, on ouvre la chambre à l'air, au-dessus de la substance alimentaire, et/ou,
- qu'on dispose en aval du filtre un récipient qui reçoit la boisson filtrée, et, que, pendant qu'on apporte le liquide en phase vapeur, puis en phase liquide, on maintienne ouvert un clapet disposé entre le filtre et le récipient et qui est fermé en l'absence du récipient.
- qu'on règle (au moins) la durée pendant laquelle on apporte le liquide en phase vapeur, à partir de moyens de réglage accessibles à l'utilisateur de la machine et qui sont ainsi réglables en fonction du nombre de tasses attendues de boisson et/ou de la quantité de boisson filtrée, et/ou
- que par ladite conduite, qui est commune (c'est-à-dire par laquelle le liquide transite en phase tant liquide que vapeur), on apporte vers la chambre d'abord ledit liquide, de préférence sous une pression de vapeur saturante, puis en phase liquide, jusqu'au dessus de la substance alimentaire.

Pour une présentation complète, un exemple non limitatif de réalisation de la machine et du procédé est détaillé ci-après, en référence aux dessins annexés où :
- la figure 1 montre une partie de la machine, en vue schématique,
- la figure 2 montre schématiquement l'ensemble de la machine,
- la figure 3 est une vue en perspective de la machine,
- la figure 4 est une vue partielle de dessus, suivant la flèche IV,
- les figures 5,6 montrent respectivement par-dessous et par-dessus en particulier les moyens mobiles de fermeture sélective (dans le couvercle, fig.6),
- la figure 7 montre l'intérieur du haut de la partie
fixe et du couvercle, ce que montrent également les figures 8,9, chambre à percolation respectivement ouverte et fermée, - et la figure 10 montre une alternative à la figure 1, avec un filtre dit « plat » qui est typiquement tronconique.

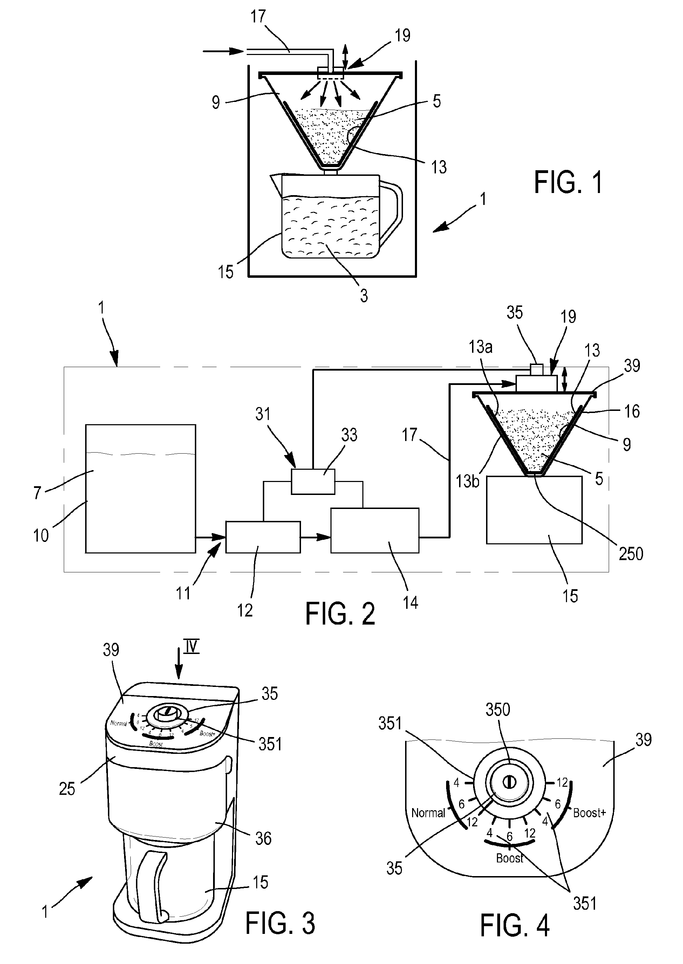

Notamment figures 1,2,3, on voit donc une machine 1 pour préparer une boisson 3 filtrée à partir d'une substance alimentaire 5 et d'un liquide 7.

La machine 1 comprend :
- une chambre 9 où est disposée la substance alimentaire,
- des moyens 11 d'alimentation en liquide pour chauffer et faire circuler vers la substance alimentaire 5 le liquide 7, à un moment en phase vapeur et à un autre en phase liquide,
- un filtre 13 ouvert en partie supérieure pour recevoir la substance alimentaire, et laissant passer le liquide 7 après que ce liquide ait traversé la substance alimentaire 5, laquelle est retenue d'un premier côté 13a du filtre, le filtre 13 étant au préalable placé dans un porte-filtre 16 que comprend la machine 1
- un récipient 15 où est reçue la boisson filtrée 3 et avec lequel communique un second côté 13b du filtre 13.

Le filtre perméable 13 peut être typiquement un cône de papier filtre qui présente une face avec une ouverture et qui est adapté à retenir et filtrer (par apport d'eau) du café réduit en poudre, ou encore du thé. L'eau ou la vapeur traverse la face ouverte du filtre 13 pour arriver directement en contact avec la substance alimentaire 5.

Dans l'exemple ici illustré, la substance alimentaire 5 contenue dans la chambre est une mouture de café. Cette substance alimentaire contient donc de la caféine. Une extraction de théine à partir d'une dose de thé peut également par exemple être souhaitée. Le liquide 7 sera alors de l'eau.

Les moyens 11 d'alimentation en liquide comprennent une conduite 17 où circule ledit liquide chauffé 7 qui est ainsi apporté à la substance alimentaire 5.

Le schéma hydraulique de la figure 2 montre qu'il peut favorablement comprendre successivement, dans la machine 1, un réservoir 10 à liquide 7 (ici de l'eau), une pompe (ici à eau) 12, un élément chauffant 14, le porte-filtre 16 et le récipient (ici une verseuse cafetière). Le filtre 13 se place dans le porte-filtre 16 ici creux dont, ici, il épouse la forme sensiblement conique à pointe dirigée verticalement vers le bas. A l'intérieur du filtre, le porte-filtre permet donc de recevoir du café moulu pour une infusion de ce café.

Comme déjà indiqué, on conseille que la conduite 17 qui s'étend du réservoir à eau 10 au porte-filtre 16 soit la même pour la circulation du liquide 7 en phase vapeur et en phase liquide.

Pour permettre, si cela est souhaité, d'augmenter le taux de récupération dans le récipient de certains constituants contenus dans la substance alimentaire placée dans la chambre, et/ou obtenir ceci assez rapidement et si possible de façon variable, en fonction du souhait de l'utilisateur ou de conditions de réglage prévues et avec un coût de fabrication limité, en vue d'une utilisation en grande série, la machine 1 comprend en outre des moyens de fermeture 19 qui ferment la chambre 9 de façon sensiblement étanche à la vapeur, au moins au-dessus de la substance alimentaire 5, lorsque le liquide 7 chaud arrive en phase vapeur par la conduite 17 qui débouche dans la chambre (voir figures 2, 5-7). Les moyens de fermeture 19 sont situés à distance du filtre 13. Ils sont situés plus précisément au-dessus du filtre 13 et il n'y a pas de contact entre les deux.

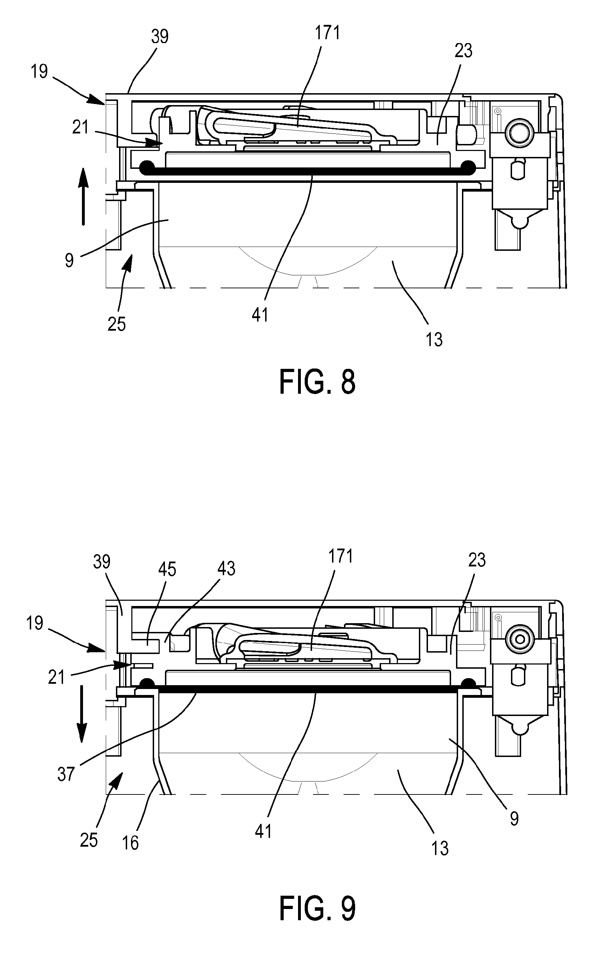

Figures 8 et 9, les moyens de fermeture 19 comprennent des moyens mobiles 21 de fermeture sélective qui (voir les flèches figures 8,9) :
- lorsque le liquide arrive dans la chambre 9 en phase vapeur, occupent une première position (figure 9) qui assure la fermeture sensiblement étanche de la chambre, ici au-dessus et en face de la substance alimentaire contenue dans la chambre 9, et,
- lorsque le liquide arrive dans la chambre en phase liquide, occupent une seconde position (figure 8) qui assure alors une ouverture à l'air extérieur de la chambre 9, au moins au-dessus de la substance alimentaire.

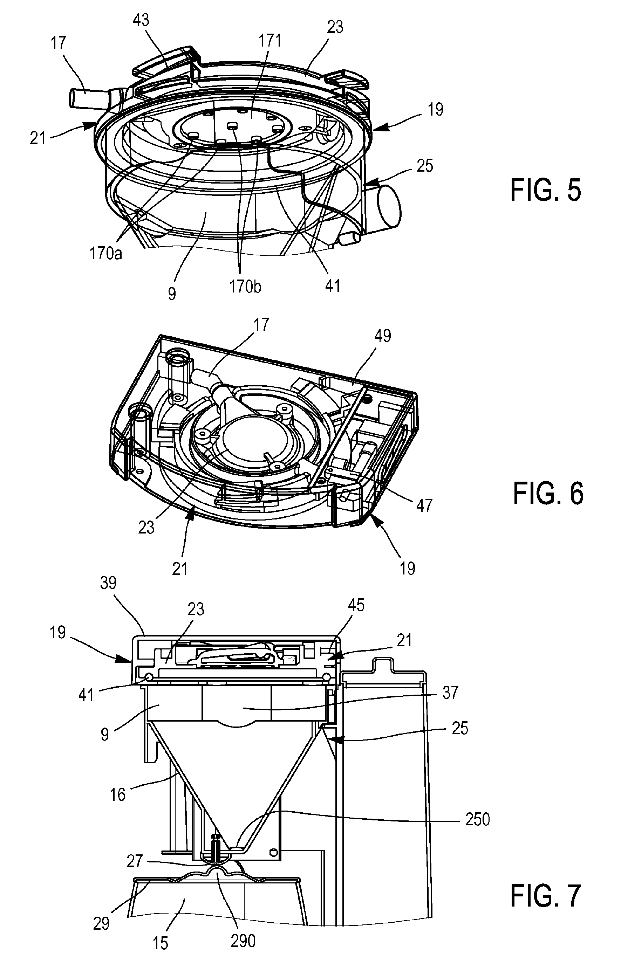

Figures 5,6,8,9, on voit que les moyens mobiles de fermeture 21 comprennent, face à la chambre, un support 23 auquel est fixée la conduite 17 (figures 5,6) et qui est monté mobile vis-à-vis d'un corps fixe 25 dans lequel est située et la chambre. Le porte-filtre 16 appartient donc au corps fixe 25.

Comme montré figure 7, on peut noter:
- qu'en partie inférieure, le corps fixe 25 présente un passage de sortie 250 pour la boisson filtrée,
- que les moyens de fermeture 19 comprennent en outre un clapet 27 que le récipient 15 ouvre quand ce récipient est présent sous le passage de sortie 250 et qui est rappelé vers une position fermée quand le récipient est absent. Le rappel peut être assuré par un ressort. On appelle couramment le tout stop-goutte.

Le passage de sortie 250 communique avec le récipient 15 quand ce récipient est présent sous le passage de sortie.

Précisément, dans l'exemple préféré illustré, le passage de sortie 250 communique avec le récipient à travers un orifice 290 ménagé dans un second couvercle 29 que le récipient présente et qui le recouvre de préférence de façon amovible.

Figure 5, on voit en outre que, vers la chambre 9, la conduite 17 se termine par plusieurs orifices 170a,170b notamment, à travers lesquels le liquide 7 est diffusé sur la substance alimentaire située dessous. On a donc plusieurs flux, comme avec une douchette. Dans la réalisation préférentielle illustrée un embout 171 est porteur des orifices 170a,170b.

La production de vapeur et l'eau chaude peuvent être générées par un élément chauffant 14 bitube et une pompe 12 électromagnétique.

Cette vapeur et l'eau chaude peuvent être obtenues par une régulation électronique de la pompe.

Pour la vapeur, la pompe pourra être alimentée de manière à obtenir un débit permettant à l'élément chauffant de produire de la vapeur assez sèche.

Pour l'eau chaude, la pompe sera favorablement alimentée de manière à obtenir, en sortie de l'embout 171 qui termine la conduite 17, de l'eau chaude (liquide) aux alentours de 92-98°C, pour une infusion optimale de café.

En relation avec ce point, on conseille que les moyens 11 d'alimentation en liquide comprennent des moyens de régulation 31 pour, qu'en phase vapeur, le liquide débouche dans la chambre à une température inférieure à 110°C et supérieure à 90°C.

Figure 2, on voit que les moyens de régulation 31 comprennent des moyens 33 (tel un compteur de temps ou timer en anglais) d'adaptation de la durée pendant laquelle le liquide est fourni à la chambre 9 en phase vapeur.

Les moyens d'adaptation 33 seront de préférence liés à des moyens de réglage 35 accessibles à l'utilisateur de la machine et qui sont ainsi réglables en fonction du nombre de tasses attendues de boisson et/ou de la quantité de cette boisson reçue dans le récipient 15.

En effet, la quantité de cette boisson attendue dans le récipient 15 sera typiquement fonction du nombre de tasses de boisson souhaitée.

Figures 3,4, les moyens de réglage 35 sont à commande électronique, avec un bouton de manoeuvre 350 à la fois pivotant et à enfoncement. Le pivotement face aux repères 351 inscrits sur un couvercle 39 (voir descriptif ci-après) permet de sélectionner le type de boisson attendu (plus ou moins fortement chargée en constituant(s) à récupérer via la phase vapeur) et, dans chaque cas, un nombre de tasses (ou une quantité de liquide à filtrer et donc de boisson filtrée attendue).

Ainsi renseignée la machine va pouvoir adapter le procédé (temps d'injection d'eau et/ou quantité d'eau pour la percolation) en fonction de la préparation sélectionnée. Dans l'exemple illustré, l'enfoncement du bouton de manoeuvre déclenche la mise en marche de la machine et, si le pivotement marque un tel choix, la fermeture de la chambre 9 pour son alimentation en vapeur. A la fin du temps d'injection de cette vapeur en face de la substance 5, l'unité centrale électronique des moyens d'adaptation 33 commande l'ouverture à l'air extérieur de la chambre, ici donc via le déplacement du support 23.

Intérieurement, le corps fixe 25 comprend le porte-filtre 16 ouvert en 37, en partie supérieure, pour y placer et en retirer la substance alimentaire 5 et/ou le filtre 13 qui est ouvert également. Le porte-filtre 16 peut être amovible, ou du moins mobile, vis-à-vis du corps fixe 25, par exemple par coulissement horizontal en face frontale de la machine, après ouverture d'une porte d'accès 36 (voir figure 3). Ainsi le remplacement du filtre dans le porte-filtre creux et/ou le chargement de la substance alimentaire 5 est/sont faciles.

Par ailleurs, la machine comprend donc ici un couvercle 39 qui recouvre l'ouverture 37 du porte-filtre 16 et dans lequel se déplace le support 23 auquel est fixée la conduite 17. Le couvercle 39 et le porte-filtre 16 sont amovibles, ou mobiles, l'un par rapport à l'autre (voir ci-dessus mobilité du porte-filtre 16 ici prévu). Le couvercle peut être alors fixé au corps fixe 25, au-dessus de lui et de son ouverture 37.

Figures 7-9, on voit en outre que les moyens mobiles de fermeture 21 comprendront favorablement un joint 41 interposé entre le corps fixe, ici le porte-filtre 16, et le support 23. En position première précitée, le joint s'applique autour de l'ouverture 37, sur un rebord périphérique du porte-filtre ou du corps fixe.

Pour guider dans son déplacement le support 23 dans le couvercle 39, les figures 5,6,9 montrent que les moyens mobiles de fermeture 21 comprennent une glissière 43 et une rampe 45, entre l'intérieur du couvercle et l'extérieur du support.

Ainsi, le support 23 pourra monter et descendre vis-à-vis du corps fixe, ici le porte-filtre 16, en se déplaçant dans le couvercle 39.
Pour passer de la première position à la seconde, non étanche, soit de la figure 9 à la figure 8, un motoréducteur peut entrainer un écrou 47 (figure 6) solidaire du couvercle 39, via une goupille.
Le couvercle étant alors monté fixe, verrouillé de façon réversible, sur le corps fixe 25 (de façon à pouvoir être écarté de celui-ci pour libérer l'accès à l'ouverture supérieure 37), le support 23 lié à ce couvercle va alors se trouver entrainé, par exemple en rotation, dans un sens, grâce aux glissière(s) 43 et rampe(s) 45 qui peuvent être en hélice.

Dans l'exemple illustré, pour déplacer le support 23 vers la seconde position, non étanche (ici la plus haute des deux positions), le motoréducteur entraine l'écrou 47 de l'avant vers l'arrière de la machine.

La descente vers la première position de fermeture, avec application du joint 41 autour de l'ouverture 37, s'opère par la rotation inverse.

Le principe de fonctionnement de la machine 1 peut être le suivant:
- si l'utilisateur souhaite par exemple un café « normal » . Il n'y a alors pas nécessairement de phase vapeur. Le couvercle reste toujours en position haute (position seconde précitée). L'infusion du café n'est alors réalisée que par de l'eau chaude (liquide 7).
- si l'utilisateur souhaite par contre un café (plus) fortement caféiné : le motoréducteur vient alors étancher le support 23 des moyens mobiles de fermeture 21 contre le corps fixe 25 (couvercle en position première, basse). L'infusion du café commence par une phase vapeur qui peut durer environ 2 minutes. Cette durée peut varier en fonction du taux d'augmentation de caféine souhaité. Ainsi, en fonction de la quantité de café désirée et de l'augmentation de caféine souhaitée, on peut prévoir que le temps d'apport de vapeur change de manière importante. Par exemple, pour une augmentation dans une tasse de 10 à 20% du taux de caféine par rapport au café dit « normal », donc pour de petites quantités (2-4 tasses a priori), 10 à 30s peuvent suffire alors qu'il faudra de l'ordre d'1min pour un plus grand nombre de tasses. Pour une augmentation supérieure à 30% le temps pourra être de l'ordre de 2 min.

Ainsi, pendant qu'on apportera le liquide 7 en phase liquide, de préférence on ouvrira à l'air la chambre 9 au-dessus de la substance alimentaire 5.

Pendant la phase d'apport de vapeur, le bitube des moyens 11 d'alimentation en liquide pourra être alimenté en continu (par exemple 1450W). Avec ce cadencement prévoyant un préchauffe d'environ 15-20s, puis un cycle opératoire de la pompe où on la fait fonctionner pendant 90-110ms puis on l'arrête environ 900-1100ms, on doit pouvoir obtenir de la vapeur à une température de plus de 98°C en sortie des orifices 170a,170b de l'embout 171 de la conduite 17. Cette vapeur, de préférence sous pression de vapeur saturante, pourra avoir un débit de 20 à 30g par minute.
Le cycle de la pompe pour l'obtention d'une vapeur plus sèche et surchauffée pourra être défini afin d'injecter une plus petite quantité d'eau dans le bitube de chauffage, par exemple en utilisant un cycle opératoire de la pompe où on la fait fonctionner pendant 15-30ms puis on l'arrête environ 150-250ms:
A la fin de la phase vapeur, le motoréducteur peut venir de nouveau éloigner le support 23 du pourtour de l'ouverture 37 jusqu'en position haute (position seconde précitée).

L'infusion du café à l'eau chaude peut commencer. Le processus peut s'arrêter lorsque toute la quantité prédéfinie d'eau chaude a été produite ou si un nombre prédéterminé de tasses a été sélectionné et qu'un volume correspondant de liquide chaud filtré a été délivré dans le récipient 15.

En place du motoréducteur, on peut prévoir qu'un électro aimant soit placé comme ce motoréducteur, au dessus du couvercle 39. L'encombrement est alors plus important.

Autre possibilité : que les déplacements du support 23 soient réalisés manuellement par l'utilisateur qui pourrait agir sur un levier basculant accessible de l'extérieur de la machine et entraînant vers le haut et le bas ce support.

Les chauffages du liquide contenu dans le réservoir interne de la machine, tant en phase vapeur et que liquide (eau chaude) peuvent être obtenus par différents types d'éléments chauffants : thermo-bloc, tube sérigraphié, etc.

Les phases vapeur et liquide (eau chaude) peuvent être obtenues par deux éléments chauffants distincts.

D'autres phases d'injection de vapeur par exemple au milieu ou à la fin des préparations précitées pourraient être réalisées.

Comme déjà précisé, le procédé pour préparer la boisson filtrée souhaitée, à partir d'un liquide et d'une substance alimentaire contenue dans la chambre 9, en amont du filtre, opère donc comme suit :
- en tant que filtre 13 disposé dans la chambre, on utilise un filtre ouvert où on apporte ladite substance,
- par la conduite 17, on apporte jusqu'en face de la substance 5 le liquide d'abord en phase vapeur, puis en phase liquide,
- et, pendant cette phase vapeur, on ferme la chambre 9 de façon sensiblement étanche à la vapeur au moins au-dessus de la substance 5 et on fait déboucher le liquide de la conduite à l'intérieur de la chambre.

De préférence, pour prévenir notamment des débordements de liquide et/ou des surpressions, voire une altération de la substance 5 ou un résultat inapproprié, on conseille, pendant qu'on apporte le liquide en phase vapeur, puis en phase liquide, de maintenir ouvert le clapet 27 disposé entre le filtre et le récipient 15.

Des tests ont été conduits pour apprécier, pour du café, quelle augmentation du taux de caféine peut être attendues avec la solution ici prévue d'apport de liquide d'abord en phase vapeur, avec fermeture de la chambre de façon sensiblement étanche, puis en phase liquide.

Les résultats ont été obtenus avec :
- une préparation de 450 à 500ml d'eau (liquide 7)
- une mouture moyenne de café (granulométrie environ 500 µm), standard en Europe,
- un cadencement de la pompe 11 pour la vapeur de 100ms en fonctionnement suivie de 900ms d'arrêt.

La cafetière a fonctionné sans café 30min avant les essais. 28g de café on été mis dans le porte filtre. La machine a préchauffé 15s, ce qui a servi également à purger le système et lancer l'injection d'eau. Comme indiqué ci-dessous, de la vapeur a été injectée pendant 2 min.

| cadencement pompe (ms) | | | | 100-900 | 100-900 |
|---|---|---|---|---|---|
| temps d'injection de vapeur (min) | 0 | 0 | | 2 | 2 |
| Quantité d'eau dans le réservoir cafetière (ml) | 500 | 500 | | 450 | 450 |
| poids mouture (g) | 28 | 28 | | 28 | 28 |
| codification du café filtré | H3 | H4 | | H03 | H04 |

| | H3 | H4 | | H03 | H04 |
|---|---|---|---|---|---|
| humidité/Extrait sec | 1,63 | 1,66 | | 2,09 | 2, 02 |
| caféine (mg/L ou g/kg) | 582,0 | 591,0 | | 884,0 | 876,0 |
| caféine pour 10g d'extrait sec | 357,8 | 355,3 | | 423,0 | 434,4 |
| variation du taux | | | | 19% | 22% |

| extrait sec (%) | H3 | H4 | | H03 | H04 |
|---|---|---|---|---|---|
| | 1,63 | 1,65 | | 2,08 | 2,03 |
| | 1,62 | 1,67 | | 2,10 | 2,02 |
| | 1,63 | 1,67 | | 2,09 | 2,00 |
| moyenne (%) | 1,63 | 1,66 | | 2,09 | 2,02 |
| T° eau : 21°C | | | | | |

On a donc pu constater une augmentation du taux de caféine à extrait sec constant de 19 à 22%.

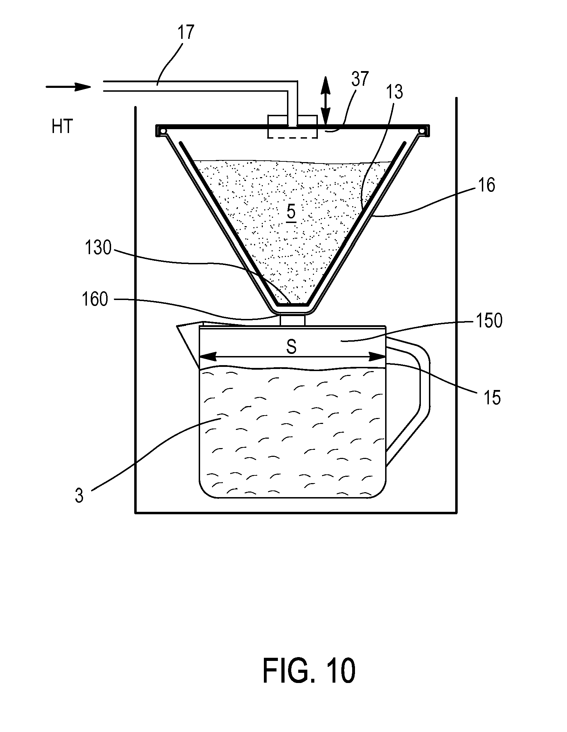

Figure 10, on retrouve la solution des figs.1,2,7, à ceci près que le porte-filtre 16 et le filtre 13 présentent un fond plat, respectivement 130,160, horizontal quand la machine 1 est opérationnelle, avec donc les ouvertures supérieures respectives 37,150 du porte-filtre et du récipient 15 orientées vers le haut (HT).

Comme illustré, le porte-filtre 16 et le filtre 13 présenteront alors a priori chacun une forme tronconique.

Ce fond plat pourra en particulier présenter un diamètre ou une section sensiblement égal(e) à celui/celle de l'ouverture 37 et/ou à la section horizontale du récipient 15.

## Revendications

1. Machine (1) pour préparer une boisson filtrée à partir d'une substance alimentaire (5) et d'un liquide (7), cette machine comprenant :
- une chambre (9) où est disposée la substance alimentaire (5),
- des moyens (11) d'alimentation en liquide pour chauffer et faire circuler vers la substance alimentaire (5) ce liquide (7), les moyens d'alimentation (11) comprenant une conduite (17) où circule ledit liquide (7) chauffé qui est ainsi apporté à la substance alimentaire (5),
- un filtre (13), dans un porte-filtre (16), ouvert pour recevoir ladite substance alimentaire, et laissant passer le liquide (7) après que ce liquide ait traversé la substance alimentaire (5) qui est retenue d'un premier côté (13a) du filtre (13),
- un récipient (15) où est reçue la boisson filtrée (3) et avec lequel communique un second côté (13b) du filtre (13), **caractérisée en ce que** le liquide (7) circule à un moment en phase vapeur et à un autre en phase liquide, la machine (1) comprend des moyens de fermeture (19), qui à distance du filtre (13), ferment la chambre (9) de façon sensiblement étanche à la vapeur au moins au-dessus de la substance alimentaire (5), lorsque le liquide (7) arrive en phase vapeur par la conduite (17) qui débouche dans la chambre (9).

2. Machine selon la revendication 1, **caractérisée en ce que** le filtre est un papier filtre.

3. Machine selon la revendication 1, **caractérisée en ce que** les moyens de fermeture (19) comprennent des moyens mobiles (21) de fermeture sélective qui:
- lorsque le liquide (7) arrive dans la chambre (9) en phase vapeur, occupent une première position qui assure ladite fermeture sensiblement étanche de la chambre (9) au moins au-dessus, ou en face, de la substance alimentaire (5), et,
- lorsque le liquide (7) arrive dans la chambre (9) en phase liquide, occupent une seconde position qui assure alors une ouverture à l'air extérieur de la chambre (9), au moins au-dessus de la substance alimentaire (5).

4. Machine selon la revendication 3, **caractérisée en ce que** les moyens mobiles (21) de fermeture comprennent, face à la chambre (9), un support (23) auquel est fixée la conduite (17) et qui est monté mobile vis-à-vis d'un corps fixe (25) dans lequel est située la chambre (9).

5. Machine selon la revendication 4, **caractérisée en ce que** :
- le corps fixe (25) comprend un porte-filtre (16) ouvert en partie supérieure pour y placer et en retirer la substance alimentaire (5) et/ou le filtre (13),
- la machine (1) comprend un couvercle (39) qui recouvre l'ouverture (37) du porte-filtre (16) et dans lequel se déplace ledit support (23) auquel est fixée la conduite (17), le couvercle (39) et le porte-filtre (16) étant amovibles, ou mobiles, l'un par rapport à l'autre.

6. Machine selon la revendication 4 ou 5, **caractérisée en ce que** les moyens mobiles (21) de fermeture comprennent en outre un joint (41) interposé entre le corps fixe (25) et ledit support (23), autour de l'ouverture (37) du porte-filtre (16) dans ladite première position.

7. Machine selon l'une des revendications 4 à 6, **caractérisée en ce que** les moyens mobiles (21) de fermeture comprennent une glissière (43) et une rampe (45), entre le couvercle (39) et ledit support (23).

8. Machine selon l'une des revendications 4 à 7, **caractérisée en ce que** :
- en partie inférieure, la chambre (9) présente un passage de sortie (250) pour la boisson filtrée (3), ce passage de sortie (250) communiquant avec le récipient (15) quand ce récipient est présent sous le passage de sortie (250), et,
- les moyens de fermeture (19) comprennent en outre un clapet (27) disposé en travers du passage et que le récipient (15) ouvre quand ce récipient (15) est présent sous ledit passage, le clapet (27) étant rappelé vers une position fermée quand le récipient (15) est absent.

9. Machine selon l'une des revendications précédentes, **caractérisée en ce que** vers la chambre (9) la conduite (17) se termine par plusieurs orifices (170a, 170b) à travers lesquels le liquide (7) est diffusé sur la substance alimentaire (5) située dessous.

10. Machine selon l'une des revendications précédentes, **caractérisée en ce que** les moyens (11) d'alimentation en liquide comprennent des moyens de régulation (31) pour, qu'en phase vapeur, le liquide (7) débouche dans la chambre (9) à une température inférieure à 110°C et supérieure à 90°C.

11. Machine selon la revendication 10, **caractérisée en ce que** les moyens de régulation (31) comprennent des moyens d'adaptation (33) de la durée pendant laquelle le liquide (7) est fourni à la chambre en phase vapeur, ces moyens d'adaptation (33) étant liés à des moyens de réglage (35) accessibles à l'utilisateur de la machine (1) et qui sont ainsi réglables en fonction du nombre de tasses attendues de boisson et/ou de la quantité de cette boisson reçue dans le récipient (15).

12. Machine selon l'une des revendications précédentes, **caractérisée en ce que** la substance alimentaire (5) contenue dans la chambre (9) :
- contient de la théine ou caféine, et/ou,
- est une mouture de café.

13. Procédé pour préparer une boisson filtrée (3) à partir d'un liquide (7) et d'une substance alimentaire (5) contenue dans une chambre (9), en amont d'un filtre (13) filtrant la substance, le procédé comprenant des étapes où, par une conduite (17), on fait déboucher le liquide (7) de la conduite (17) à l'intérieur de la chambre (9), **caractérisé en ce qu'**en tant que filtre disposé dans la chambre (9), on utilise un filtre ouvert où on apporte ladite substance, on apporte jusqu'en face de la substance alimentaire (5) le liquide (7) d'abord en phase vapeur, puis en phase liquide, pendant qu'on apporte le liquide (7) en phase vapeur, on ferme la chambre (9) de façon sensiblement étanche à la vapeur au moins au-dessus de la substance alimentaire (5)

14. Procédé selon la revendication 13, **caractérisé en ce que**, pendant qu'on apporte le liquide (7) en phase liquide, on ouvre la chambre (9) à l'air, au-dessus de la substance alimentaire (5).

15. Procédé selon la revendication 13 ou 14, **caractérisé en ce qu'**on dispose en aval du filtre (13) un récipient (15) qui reçoit la boisson filtrée (3), et, pendant qu'on apporte le liquide (7) en phase vapeur, puis en phase liquide, on maintient ouvert un clapet (27) disposé entre le filtre (13) et le récipient (15) et qui est fermé en l'absence du récipient (15).

16. Procédé selon l'une des revendications 13 à 15, **caractérisé en ce qu'**on règle la durée pendant laquelle on apporte le liquide (7) en phase vapeur, à partir de moyens de réglage (35) accessibles à l'utilisateur de la machine (1) et qui sont ainsi réglables en fonction du nombre de tasses attendues de boisson et/ou de la quantité de boisson filtrée (3).

17. Procédé selon l'une des revendications 13 à 16, **caractérisé en ce que** par ladite conduite (17), qui est commune, on apporte vers la chambre (9) d'abord le liquide (7) dans un état de vapeur, de préférence à pression de vapeur saturante, puis en phase liquide, jusqu'au dessus de la substance alimentaire (5).

## Patentansprüche

1. Maschine (1) zum Zubereiten eines Filtergetränks aus einer Lebensmittelsubstanz (5) und einer Flüssigkeit (7), wobei diese Maschine folgendes umfasst:
- eine Kammer (9), in der die Lebensmittelsubstanz (5) angeordnet ist,
- Mittel (11) zur Flüssigkeitsversorgung, um diese Flüssigkeit (7) zu erhitzen und zur Lebensmittelsubstanz (5) zufließen zu lassen, wobei die Versorgungsmittel (11) eine Leitung (17) umfassen, durch die die besagte erhitzte Flüssigkeit (7) fließt, die somit zur Lebensmittelsubstanz (5) gebracht wird,
- einen Filter (13) in einem Filterhalter (16), der offen ist, um die besagte Lebensmittelsubstanz aufzunehmen und der die Flüssigkeit (7) durchlaufen lässt, nachdem diese Flüssigkeit durch die Lebensmittelsubstanz (5) gelaufen ist, die auf einer ersten Seite (13a) des Filters (13) zurückgehalten wird,
- einen Behälter (15), in dem das Filtergetränk (3) aufgenommen wird, und mit dem eine zweite Seite (13b) des Filters verbunden ist, **dadurch gekennzeichnet, dass** die Flüssigkeit (7) zu einem Zeitpunkt in der Dampfphase und zu einem anderen in der flüssigen Phase zirkuliert, wobei die Maschine (1) Mittel zum Schließen (19) umfasst, die die Kammer (9) im Abstand zum Filter (13) zumindest über der Lebensmittelsubstanz (5) in einer in etwa dampfdichten Form schließen, wenn die Flüssigkeit (7) in der Dampfphase durch die Leitung (17) ankommt, die in die Kammer (9) mündet.

2. Maschine nach Anspruch 1, **dadurch gekennzeichnet, dass** der Filter ein Filterpapier ist.

3. Maschine nach Anspruch 1, **dadurch gekennzeichnet, dass** die Mittel zum Schließen (19) mobile Mittel (21) zum selektiven Schließen umfassen, die:
- wenn die Flüssigkeit (7) in der Dampfphase in der Kammer (9) ankommt, eine erste Position einnehmen, die für den in etwa dichten Verschluss der Kammer (9) zumindest über oder gegenüber der Lebensmittelsubstanz (5) sorgt, und,
- wenn die Flüssigkeit (7) in der flüssigen Phase in der Kammer (9) ankommt, eine zweite Position einnehmen, die somit für eine Öffnung nach außen, außerhalb der Kammer (9) zumindest über der Lebensmittelsubstanz (5) sorgt.

4. Maschine nach Anspruch 3, **dadurch gekennzeichnet, dass** die mobilen Mittel (21) zum Schließen gegenüber der Kammer (9) eine Halterung (23) umfassen, an der die Leitung (17) befestigt ist, und die mobil gegenüber einem festen Gehäuse (25) montiert ist, in dem sich die Kammer (9) befindet.

5. Maschine nach Anspruch 4, **dadurch gekennzeichnet, dass**:
- das feste Gehäuse (25) einen Filterhalter (16) umfasst, der in seinem oberen Abschnitt offen ist, um darin die Lebensmittelsubstanz (5) und/oder den Filter (13) anzubringen und zu entnehmen,
- die Maschine (1) einen Deckel (39) umfasst, der die Öffnung (37) des Filterhalters (16) abdeckt und in dem sich die besagte Halterung (23) bewegt, an der die Leitung (17) befestigt ist, wobei der Deckel (39) und der Filterhalter (16) voneinander abnehmbar sind oder zueinander bewegt werden können.

6. Maschine nach Anspruch 4 oder 5, **dadurch gekennzeichnet, dass** die mobilen Mittel (21) zum Schließen darüber hinaus eine Dichtung (41) umfassen, die zwischen dem festen Gehäuse (25) und der besagten Halterung (23) um die Öffnung (37) des Filterhalters (16) in der besagten ersten Position angebracht ist.

7. Maschine nach einem der Ansprüche 4 bis 6, **dadurch gekennzeichnet, dass** die mobilen Mittel (21) zum Schließen eine Gleitbahn (43) und eine Rampe (45) zwischen dem Deckel (39) und der besagten Halterung (23) umfassen.

8. Maschine nach einem der Ansprüche 4 bis 7, **dadurch gekennzeichnet, dass**:
- die Kammer (9) im unteren Abschnitt eine Auslasspassage (250) für das Filtergetränk (3) aufweist, wobei diese Auslasspassage (250) mit dem Behälter (15) verbunden ist, wenn der Behälter unter der Auslasspassage (250) angebracht ist, und,
- die Mittel zum Schließen (19) darüber hinaus eine Klappe (27) umfassen, die quer durch die Passage angeordnet ist, und die der Behälter (15) öffnet, wenn dieser Behälter (15) unter der besagten Passage angebracht ist, wobei die Klappe (27) in eine geschlossene Position zurückgeholt wird, wenn der Behälter (15) nicht angebracht ist.

9. Maschine nach einem der vorherigen Ansprüche, **dadurch gekennzeichnet, dass** sich die Leitung (17) zur Kammer (9) hin durch mehrere Öffnungen (170a, 170b) abschließt, durch die die Flüssigkeit (7) auf die Lebensmittelsubstanz (5) verteilt wird, die sich darunter befindet.

10. Maschine nach einem der vorherigen Ansprüche, **dadurch gekennzeichnet, dass** die Mittel (11) zur Flüssigkeitsversorgung Regelungsmittel (31) umfassen, damit die Flüssigkeit (7) in der Dampfphase mit einer Temperatur von unter 110°C und über 90°C in die Kammer (9) mündet.

11. Maschine nach Anspruch 10, **dadurch gekennzeichnet, dass** die Regelungsmittel (31) Mittel zum Anpassen (33) der Dauer umfassen, während der die Flüssigkeit (7) der Kammer in der Dampfphase zugeführt wird, wobei diese Mittel zum Anpassen (33) mit Mitteln zum Einstellen (35) verbunden sind, auf die der Benutzer der Maschine (1) zugreifen kann, und die somit je nach Anzahl der erwarteten Tassen und/oder Menge dieses Getränkes, die vom Behälter (15) aufgefangen wird, eingestellt werden können.

12. Maschine nach einem der vorherigen Ansprüche, **dadurch gekennzeichnet, dass** die Lebensmittelsubstanz (5), die in der Kammer (9) enthalten ist:
- Tein oder Koffein enthält, und/oder,
- ein Kaffeepulver ist.

13. Verfahren zum Zubereiten eines Filtergetränks (3) aus einer Flüssigkeit (7) und einer Lebensmittelsubstanz (5), die in einer Kammer (9) vor einem Filter (13) enthalten ist, der die Substanz filtert, wobei das Verfahren Schritte umfasst, in denen man durch eine Leitung (17) die Flüssigkeit (7) aus der Leitung (17) ins Innere der Kammer (9) münden lässt, **dadurch gekennzeichnet, dass** man als Filter, der in der Kammer (9) angeordnet ist, einen offenen Filter verwendet, in den man die besagte Substanz einbringt, man bis gegenüber der Lebensmittelsubstanz (5) die Flüssigkeit (7) zuerst in der Dampfphase, und danach in der flüssigen Phase anbringt, während man die Flüssigkeit (7) in der Dampfphase einbringt, man die Kammer (9) zumindest über der Lebensmittelsubstanz (5) in etwa dampfdicht verschließt

14. Verfahren nach Anspruch 13, **dadurch gekennzeichnet, dass** während man die Flüssigkeit (7) in der flüssigen Phase einbringt, man die Kammer (9) über der Lebensmittelsubstanz (5) nach außen hin öffnet.

15. Verfahren nach Anspruch 13 oder 14, **dadurch gekennzeichnet, dass** man nach dem Filter (13) über einen Behälter (15) verfügt, der das Filtergetränk (3) aufnimmt, und während man die Flüssigkeit (7) in der Dampfphase und danach in der flüssigen Phase einbringt, man eine Klappe (27) offen hält, die zwischen dem Filter (13) und dem Behälter (15) angeordnet ist, und die geschlossen ist, wenn der Behälter (15) nicht angebracht ist.

16. Verfahren nach einem der Ansprüche 13 bis 15, **dadurch gekennzeichnet, dass** man die Dauer, während der man die Flüssigkeit (7) in der Dampfphase einbringt anhand von Einstellmitteln (35) regelt, auf die der Benutzer der Maschine (1) zugreifen kann, und die je nach Anzahl der erwarteten Tassen und/oder Menge dieses Getränkes, die vom Behälter (15) aufgefangen wird, eingestellt werden können.

17. Verfahren nach einem der Ansprüche 13 bis 16, **dadurch gekennzeichnet, dass** man über die besagte Leitung (17), die gemeinsam genutzt wird, zuerst die Flüssigkeit (7) in einem Dampfzustand, und vorzugsweise mit einem gesättigten Dampfdruck und danach in der flüssigen Phase bis über die Lebensmittelsubstanz (5) zur Kammer (9) zuführt.

## Claims

1. Machine (1) for preparing a filtered beverage from a food substance (5) and a liquid (7), said machine comprising:
- a chamber (9) wherein is arranged the food substance (5)
- liquid supplying means (11) to heat and circulate to the food substance (5) this liquid (7), the liquid supplying means (11) comprising a duct (17) wherein circulates said heated liquid (7) which is as such provided to the food substance (5),
- a filter (13) in a filter holder (16), open to receive said food substance, and passing the liquid (7) after the liquid has passed through the food substance (5) which is retained in a first side (13a) of the filter (13),
- a container (15) in which the filtered beverage (3) is received and with which communicates a second side (13b) of the filter (13), **characterised in that** the liquid (7) circulates at one moment in vapour phase and at another moment in liquid phase, the machine (1) comprises closing means (19) which, at a distance from the filter (13), close the chamber (9) in substantially leaktight manner to the vapour at least above the food substance (5) when the liquid (7) arrives in vapour phase by the duct (17) which opens into the chamber (9).

2. Machine according to claim 1, **characterised in that** the filter is a filter paper.

3. Machine according to claim 1, **characterised in that** the closing means (19) comprises movable means (21) for selective closing that:
- when the liquid (7) enters the chamber (9) in vapour phase, occupy a first position that provides said substantially sealed closing of the chamber (9) at least above, or opposite, the food substance (5), and,
- when the liquid (7) enters the chamber (9) in the liquid phase, occupy a second position which then provides an opening to the outside air of the chamber (9), at least above the food substance (5).

4. Machine according to claim 3, **characterised in that** the movable means (21) for closing include, opposite the chamber (9), a support (23) to which is attached the duct (17) and which is mounted mobile with respect to a fixed body (25) in which is located the chamber (9).

5. Machine according to claim 4, **characterised in that**:
- the fixed body (25) comprises a filter holder (16) open in the upper portion to place therein and remove the food substance (5) and/or the filter (13),
- the machine (1) comprises a cover (39) covering the opening (37) of the filter holder (16) and wherein is displaced said support (23) to which is attached the duct (17), the cover (39) and filter holder (16) being removable, or movable, in relation to another.

6. Machine according to claim 4 or 5, **characterised in that** the movable means (21) for closing further comprise a seal (41) interposed between the fixed body (25) and said support (23), around the opening (37) of the filter holder (16) in said first position.

7. Machine according to one of claims 4 to 6, **characterised in that** the movable means (21) for closing comprise a slide (43) and a ramp (45), between the cover (39) and said support (23).

8. Machine according to one of claims 4 to 7, **characterised in that**:
- in the lower portion, the chamber (9) has an outlet passage (250) for the filtered beverage (3), this outlet passage (250) communicating with the container (15) when said container is present under the outlet passage (250), and,
- the closing means (19) further comprise a valve (27) arranged across the passageway and the container (15) opens when this container (15) is present under said passage, the valve (27) being returned to a closed position when the container (15) is absent.

9. Machine according to one of the preceding claims, **characterised in that** towards the chamber (9) the duct (17) terminates in a plurality of orifices (170a, 170b) through which the liquid (7) is diffused over the food substance (5) located below.

10. Machine according to one of the preceding claims, **characterised in that** the liquid supplying means (11) comprise regulating means (31) for, in vapour phase, the liquid (7) opens into the chamber (9) at a temperature below 110°C and above 90°C.

11. Machine according to claim 10, **characterised in that** the regulating means (31) comprise adjustment means (33) of the period during which the liquid (7) is supplied to the chamber in vapour phase, said adjustment means (33) being associated with means for regulating (35) accessible to the user of the machine (1) and which are thus adjustable depending on the expected number of cups of beverage and/or quantity of this beverage received in the container (15).

12. Machine according to one of the preceding claims, **characterised in that** the food substance (5) contained in the chamber (9):
- contains theine or caffeine, and/or,
- is ground coffee.

13. Method for preparing a filtered beverage (3) from a liquid (7) and a food substance (5) contained in a chamber (9), upstream of a filter (13) filtering the substance, the method comprising steps wherein, by a duct (17), the fluid (7) from the duct (17) is made to exit into the chamber (9), **characterised in that** as a filter arranged in the chamber (9), an open filter is used wherein said substance is brought, the liquid (7) is brought opposite the food substance (5), first in vapour phase then in liquid phase, while the liquid (7) is being brought in vapour phase, the chamber (9) is closed in substantially leaktight manner to the vapour at least above the food substance (5).

14. Method according to claim 13, **characterised in that**, while the liquid (7) is being brought in liquid phase, the chamber (9) is opened to the air, above the food substance (5).

15. Method according to claim 13 or 14, **characterised in that** a container (15) is arranged downstream of the filter (13) which receives the filtered beverage (3), and, while the liquid (7) in vapour phase, then in liquid phase, is brought, a valve (27) arranged between the filter (13) and the container (15) is kept open and which is closed in the absence of the container (15).

16. Method according to one of claims 13 to 15, **characterised in that** sets the duration during which the liquid (7) in the vapour phase is brought, from means for regulating (35) accessible to the user of the machine (1) and which can be adjusted according to the number expected cups of beverage and/or the quantity of filtered beverage (3).

17. Method according to one of claims 13 to 16, **characterised in that** by said duct (17), which is common, is brought firstly towards the chamber (9) the liquid (7) in a vapour state, preferably at saturation vapour pressure, then in liquid phase, to the top of the food substance (5).
